# EUROPEAN PATENT SPECIFICATION

(11) **EP 0 563 966 B1**
(45) Date of publication and mention of the grant of the patent: **18.07.2001**
(21) Application number: 93105436.5
(22) Date of filing: 01.04.1993
(51) Int. Cl.: G06T 5/30

(54) **Thinning method of an image**
Bildverdünnungsverfahren
Procédé d'amincissement d'images

(30) Priority: 02.04.1992 JP 10929592
(43) Date of publication of application: 06.10.1993
(73) Proprietor: YOZAN INC., Tokyo 155 (JP)
(72) Inventor: Kumagai, Ryohei, c/o Ezel Inc., Tokyo 112 (JP)
(74) Representative: Grünecker, Kinkeldey, Stockmair & Schwanhäusser Anwaltssozietät

(56) References cited:
- EP-A- 0 375 806
- COMMUNICATIONS OF THE ACM. vol. 30, no. 2 , February 1987 , NEW YORK, USA pages 156 - 160 CHRISTOPHER M. HOLT ET AL. 'An Improved Parallel Thinning Algorithm.'
- PROCEEDINGS OF THE 1991 IEEE INTERNATIONAL CONFERENCE ON SYSTEMS,MAN & CYBERNETICS. "DECISION AIDING FOR COMPLEX SYSTEMS". vol. 1 , 13 October 1991 , CHARLOTTESVILLE, VIRGINIA, USA pages 661 - 666 G.V.S.RAJU & YICHANG XU 'Study of Parallel Thinning Algorithms"'
- COMPUTER VISION,GRAPHICS AND IMAGE PROCESSING. vol. 40, no. 1 , October 1987 , DULUTH, MN, USA pages 30 - 40 ROLAND T.CHIN & HONG-KOON WAN 'A One-Pass Thinning Algorithm and its Parallel Implementation.'
- PATTERN RECOGNITION. vol. 17, no. 3 , 1984 , OXFORD, GB pages 279 - 284 NABIL JEAN NACCACHE & RAJJAN SHINGHAL 'An Investigation into the SYkeletonization Approach of Hilditch.'

## Description

The invention relates to an image processing method for thinning an object according to the preamble part of claim 1.

Such a method is known from EP-A-0 375 806.

In the microscopic image of a metal crystal, the crystal interface appears as a line having a width of more than one pixel. It is impossible to measure correctly the particle size without transforming this boundary line into a line having a width of one pixel and being positioned in the middle of the original boundary line. Consequently, it is necessary to transform the original boundary line to a line of one pixel width at the center of the original boundary line. This process is called thinning. Thinning must not interrupt the original boundary lines, which would fuse adjacent crystals into each other. It is impossible to measure particles like crystals accurately when the boundary line is interrupted. For preventing wrong measurements, the thinning process has to meet the following demands:
1) The width of a thinned line is one pixel;
2) The thinned line is substantially positioned at the center of the original boundary line;
3) Continuity of the original boundary lines is preserved;
4) An end part of a thinned line is not shortened;
5) Thinning does not generate a spike-like line if a boundary part is uneven; and
6) Boundary lines are not deformed when they intercept each other.

The demands 1) to 4) are called basic conditions of thinning, which an algorithm must satisfy first. Such an algorithm is described in "Image Processing on a Personal Computer", by Hasegawa, Junichi, published by Gijutsuhyoronsha, pages 66 and 67, 1996.

A further known thinning method is called HILDITCH's method. Its performance has been thoroughly investigated. It turned out that the processing speed of Hilditch's method is not high enough because Hilditch's method counts not only the number of the connectedness of the objective pixels but also the number of the background pixels.

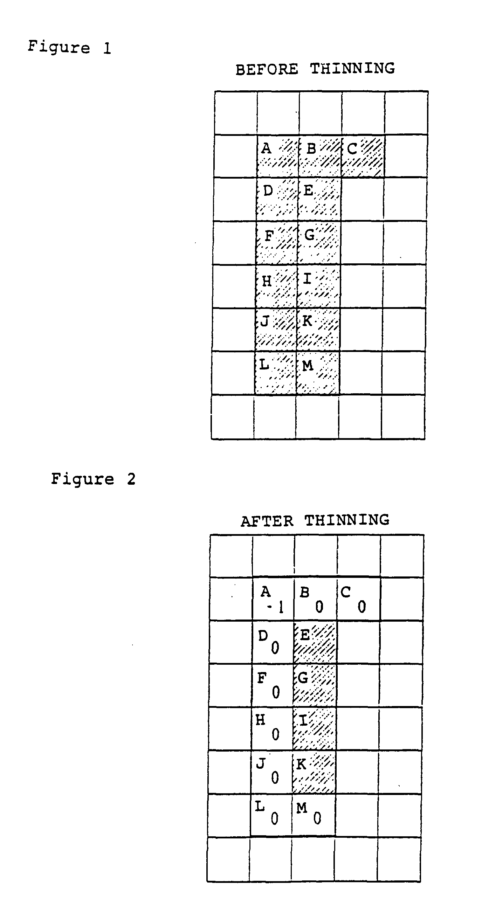

In order to increase the processing speed, an image processing method was proposed in JP 64-13680. However, this method completely lost a boundary line, when the width of the boundary line changed from three pixels to two pixels (figure 1).

In order to overcome this problem EP-A-0 375 806 discloses a thinning method which distinguishes between parallel processing and sequential processing. Parallel processing means that in each process cycle the neighbour pixels around the pixel to be processed are evaluated on the basis of their values before that processing cycle. In contrast thereto, sequential processing means that each pixel is evaluated on the basis of its value in that processing cycle. In order to distinguish between parallel and sequential processing, an index value of, for example, -1 is assigned to a pixel which is processed according to parallel processing. This document teaches the processing rules discussed in connection with figures 3 to 5 and 7 and 8.

It is the object of the invention to solve the conventional problems and in particular to avoid that a surface boundary is interrupted when its width changes from three pixels to two pixels.

This object is solved by the image processing method of claim 1.

In the following, a preferred embodiment of the invention is described referring to the accompanying drawings.

Figure 1 shows a diagram before performing thinning.

Figure 2 shows a diagram after thinning the diagram of Figure 1.

Figure 3 shows a diagram elucidating the judgment condition [1].

Figure 4 shows a diagram elucidating the judgment condition [2].

Figure 5 shows a diagram elucidating the judgment condition [3].

Figure 6 shows a diagram elucidating the judgment condition [4].

Figure 7 shows a diagram elucidating the judgment condition [5].

Figure 8 shows a diagram elucidating the judgment condition [6].

An embodiment in a thinning method of an image according to the present invention is explained, referring to the attached drawings.

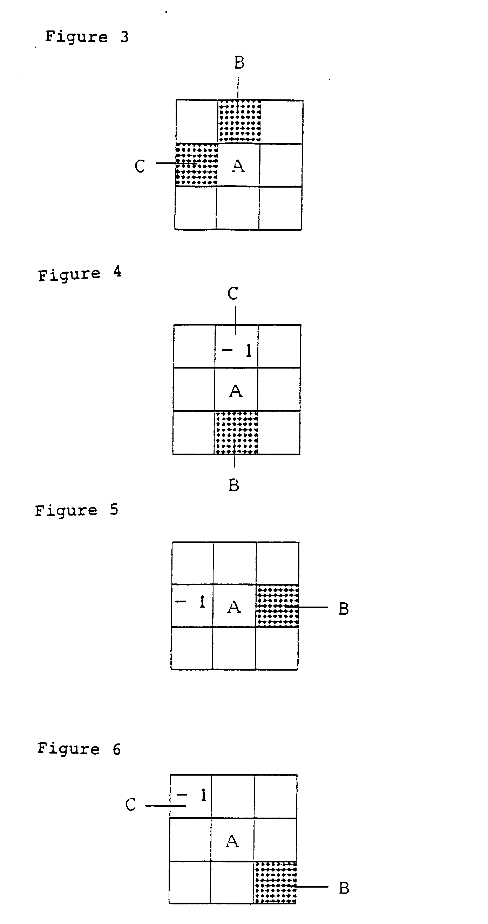

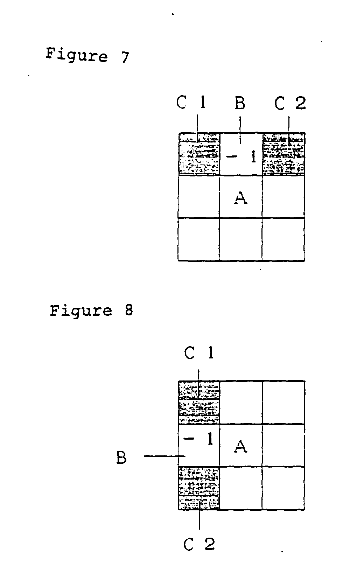

A general scan from the left to the right and from the top to the bottom is adopted in the embodiment. This invention determines beforehand the value of a pixel which is not the value of a processing object but is a background pixel value instead (for example "0"). When a pixel is neither an end point nor an independent point in parallel processing, has connectedness in sequential processing, and is a boundary pixel in parallel processing, the value of this pixel is changed to the background pixel value in order to convert a figure that does not have a background pixel value in the image into a line with a width of one pixel preserving characteristics of the figure of the configuration. A non-existing index pixel value is defined as an index pixel value in the image (non-existing pixel value in the image, for example "-1") and a pixel is picked up in the image as an objective pixel "A" at successive scanning. The value of the objective pixel "A" is changed to a background pixel value when the objective pixel "A" has an index pixel value, and the conditions below are adopted in 3 x 3 convolution when the objective pixel "A" does not have a background pixel value nor an index pixel value.
[1] When the pixels above and left of the objective pixel "A" have a background pixel value, the objective pixel "A" is given an index pixel value (e.g.-1) different from a general pixel value (Fig. 3).
[2] In the case where the condition does not meet condition [1]. in sequential processing, when the pixel "C" above the objective pixel "A" has an index pixel value (e.g. -1) and when the pixel "B" beneath it has a background pixel value, the value of the objective pixel "A" is not changed (Fig. 4).
[3] If condition [1] is not fulfilled, in sequential processing, when the pixel "C" left of an objective pixel "A" has an index pixel value and when pixel "B" right of an objective pixel "A" has a background pixel value, the objective pixel value "A" remains unchanged (Fig. 5).
[4] If condition [1] is not fulfilled, in sequential processing, when objective pixel "C" on the upper left of an objective pixel "A" has an index pixel value and pixel "B" beneath the lower right of objective pixel "A" has a background pixel value, the objective pixel "A" is preserved as it is (Fig. 6).
[5] If conditions [1] to [4] are not fulfilled, in sequential processing, when the pixel "B" above the objective pixel "A" has an index pixel value, and when in parallel processing, the pixels "C1" and "C2" left and right of pixel "B" have background pixel values, the value of the objective pixel "A" is set to the index pixel value (Fig. 7).
[6] If conditions [1] to [4] are not fulfilled, in sequential processing, if pixel "B" left of pixel "A" has an index pixel value and pixel "C1" above pixel "B" and pixel "C2" below pixel "B" have background pixel values, objective pixel "A" is set to the index pixel value (Fig. 8).

The parallel processing judges that a pixel value changed just on the scanning does not change yet. and the successive processing evaluates the pixel value after the change with respect to the pixel whose pixel value is changed by a scan. And the pixel with the index pixel value generated by these processing is changed its pixel value to a background pixel value by the next scan.

The method of this invention is performed on a line having a width ranging from 2 to 3 pixels shown in Figure 1. The pixel "A" satisfies the condition [1] and has an index pixel value. Pixel "B", "C", "D" do not satisfy the conditions from [1] to [6] and are set to background pixel values. Pixel "E" satisfies the case [4] (Fig.6) and therefore its value is preserved. Pixel "F" does not satisfy the cases from [1] to [6] and is set to the background pixel value. As pixel "F" changes its value to a background pixel value, pixel "G" has 2-connectedness in sequential processing and is to be preserved. Pixel "H" does not satisfy the cases from [1] to [6] and is set to the background pixel value. By pixel "H" being set to a background pixel value, the pixel "I" has 2-connectedness in sequential processing and is to be preserved. Pixel "J" does not satisfy the cases from [1] to [6] and is set to the background pixel value. Pixel "J" having a background pixel value, pixel "K" has 2-connectedness in sequential processing and is to be preserved. Pixel "L" and "M" do not satisfy the cases from [1] to [6] and their values are set to be the background pixel value. As a result of this thinning processing, the line in Fig. 1 is transformed to a thinned line shown in Fig. 2.

According to this invention as mentioned above, a figure having a line whose width changes from 3 pixels to 2 pixels along the parallel direction of the scan line can be thinned into a line of one pixel width without seriously slowing down processing.

## Claims

1. An image processing method for thinning an object in an image comprised of pixels, each pixel having a value signifying that said pixel either belongs to the background or to an object, or having an index value, said pixels are successively scanned along scan lines thereby changing the value of a current pixel in a current line encountered during scanning according to the following thinning rules:
A) changing the value of said current pixel to said background value, if said current pixel has said index value;
B) changing the value of said current pixel according to rules B1 to B3, if said current pixel has said object value and is a border pixel but not an end pixel, wherein said end pixel is defined in that just one of its 8 nearest neighbours has said object value:
B1) changing the value of said current pixel into said index value, if the preceding pixel in said current line and the corresponding pixel in the preceding line have said background value (figure 3);
B2) preserving the value of said current pixel, if said current pixel has not already been processed by rule B1, and if one of the conditions B2a and B2b is fulfilled:
B2a) the pixel in the preceding line corresponding to said current pixel has said index value and the pixel positioned in the subsequent line corresponding to said current pixel has said background value (figure 4), or
B2b) the pixel preceding to said current pixel in said current line has said index value and the pixel subsequent to said current pixel in said current line has said background value (figure 5);
B3) changing the value of said current pixel to said index value, if said current pixel has not already been processed by one of the above rules B1 and B2 and if one of the following conditions B3a or B3b are fulfilled:
B3a) the pixel in the preceding line corresponding to said current pixel has said index value and the preceding pixel and the subsequent pixel of said corresponding pixel in the preceding scan line have said background value (figure 7), or
B3b) the preceding pixel of said current pixel in said current line has said index value and the pixels in the preceding and subsequent line corresponding to said preceding pixel have said background value (figure 8);
**characterized in that** in rule B2 the value of said current pixel is also preserved, if the pixel preceding of the corresponding pixel of said current pixel in said preceding scan line has said index value and the pixel subsequent to the corresponding pixel of said current pixel in the subsequent scan line has said background value (figure 6).

## Patentansprüche

1. Bildverarbeitungsverfahren zum Verdünnen eines Objekts in einem Bild, das aus Pixeln zusammengesetzt ist, wobei jedes Pixel einen Wert besitzt, der angibt, daß das Pixel entweder zu dem Hintergrund oder zu einem Objekt gehört, oder einen Indexwert besitzt, wobei die Pixel aufeinanderfolgend entlang Abtastlinien abgetastet werden, um dadurch den Wert eines momentanen Pixels in einer momentanen Linie, die während eines Abtastens erfaßt wird, gemäß den folgenden Verdünnungsregeln zu ändern:
A) Ändern des Werts des momentanen Pixels zu dem Hintergrundwert, falls das momentane Pixel den Indexwert besitzt;
B) Ändern des Werts des momentanen Pixels gemäß Regeln B1 bis B3, falls das momentane Pixel den Objektwert besitzt und ein Grenzpixel ist, allerdings nicht ein Endpixel ist, wobei das Endpixel dahingehend definiert ist, daß nur eines seiner 8 nächsten Nachbarn den Objektwert besitzt:
B1) Ändern des Werts des momentanen Pixels in den Indexwert, falls das vorhergehende Pixel in der momentanen Linie und das entsprechende Pixel in der vorhergehenden Linie den Hintergrundwert besitzt (Figur 3);
B2) Bewahren des Werts des momentanen Pixels, falls das momentane Pixel nicht bereits durch Regel B1 verarbeitet worden ist und falls einer der Zustände B2a und B2b erfüllt ist:
B2a) das Pixel in der vorhergehenden Linie entsprechend dem momentanen Pixel besitzt den Indexwert und das Pixel, das in der darauffolgenden Linie entsprechend dem momentanen Pixel positioniert ist, besitzt den Hintergrundwert (Figur 4), oder
B2b) das Pixel, das dem momentanen Pixel in der momentanen Linie vorausgeht, besitzt den Indexwert, und das Pixel, das dem momentanen Pixel in der momentanen Linie folgt, besitzt den Hintergrundwert (Figur 5);
B3) Ändern des Werts des momentanen Pixels zu dem Indexwert, falls das momentane Pixel nicht bereits durch eine der vorstehenden Regeln B1 und B2 verarbeitet worden ist und falls einer der folgenden Zustände B3a oder B3b erfüllt ist:
B3a) das Pixel in der vorhergehenden Linie entsprechend dem momentanen Pixel besitzt den Indexwert und das vorhergehende Pixel und das darauffolgende Pixel des entsprechenden Pixels in der vorhergehenden Abtastlinie besitzen den Hintergrundwert (Figur 7), oder
B3b) das vorhergehende Pixel des momentanen Pixels in der momentanen Linie besitzt den Indexwert und die Pixel in der vorhergehenden und darauffolgenden Linie entsprechend dem vorhergehenden Pixel besitzen den Hintergrundwert (Figur 8);
dadurch gekennzeichnet, daß in Regel B2 der Wert des momentanen Pixels auch bewahrt wird, falls das Pixel, das dem entsprechenden Pixel des momentanen Pixels in der vorhergehenden Abtastlinie vorausgeht, den Indexwert besitzt, und das Pixel, das dem entsprechenden Pixel des momentanen Pixels in der darauffolgenden Abtastlinie folgt, den Hintergrundwert besitzt (Figur 6).

## Revendications

1. Procédé de traitement d'images pour amincir un objet dans une image composée de pixels, chaque pixel ayant une valeur signifiant que ledit pixel appartient soit au fond soit à un objet, ou ayant une valeur d'indice, lesdits pixels étant successivement balayés le long de lignes de balayage en changeant ainsi la valeur d'un pixel présent sur une ligne présente trouvée pendant un balayage conformément aux règles d'amincissement suivantes :
A) en changeant la valeur dudit pixel présent en ladite valeur de fond, si ledit pixel présent a ladite valeur d'indice ;
B) en changeant la valeur dudit pixel présent conformément à des règles B1 à B3, si ledit pixel présent a ladite valeur d'objet et est un pixel de bord mais non un pixel d'extrémité, où ledit pixel d'extrémité est défini en ce que juste un de ses 8 voisins les plus proches a ladite valeur d'objet ;
B1) en changeant la valeur dudit pixel présent en ladite valeur d'indice, si le pixel précédent sur ladite ligne présente et le pixel correspondant sur la ligne précédente ont ladite valeur de fond (Figure 3);
B2) en conservant la valeur dudit pixel présent, si ledit pixel présent n'a pas déjà été traité par la règle B1, et si l'une des conditions B2a et B2b est satisfaite ;
B2a) le pixel sur la ligne précédente correspondant audit pixel présent a ladite valeur d'indice et le pixel positionné sur la ligne suivante correspondant audit pixel présent a ladite valeur de fond (Figure 4), ou
B2b) le pixel précédant ledit pixel présent sur ladite ligne présente a ladite valeur d'indice et le pixel suivant ledit pixel présent sur ladite ligne présente a ladite valeur de fond (Figure 5) ;
B3) en changeant la valeur dudit pixel présent en ladite valeur d'indice, si ledit pixel présent n'a pas déjà été traité par l'une des règles B1 et B2 ci-dessus et si l'une des conditions B3a et B3b suivantes est satisfaite ;
B3a) le pixel sur la ligne précédente correspondant audit pixel présent a ladite valeur d'indice et le pixel précédent et le pixel suivant ledit pixel correspondant sur la ligne de balayage précédente ont ladite valeur de fond (Figure 7), ou
B3b) le pixel précédent ledit pixel présent sur ladite ligne de balayage a ladite valeur d'indice et les pixels sur les lignes précédente et suivante correspondant audit pixel précédent ont ladite valeur de fond (Figure 8) ;
caractérisé en ce que, dans la règle B2, la valeur dudit pixel présent est aussi conservée, si le pixel précédent le pixel correspondant dudit pixel présent sur ladite ligne de balayage précédente a ladite valeur d'indice et le pixel suivant le pixel correspondant dudit pixel présent sur la ligne de balayage suivante a ladite valeur de fond (Figure 6).
